# EUROPEAN PATENT APPLICATION

(11) **EP 2 634 407 A1**
(43) Date of publication of application: **04.09.2013**
(21) Application number: 12157518.7
(22) Date of filing: 29.02.2012
(51) Int. Cl.: F02D 41/00, F02D 13/02, F02M 59/10

(54) **Camshaft position determination system**

(71) Applicant: Volvo Car Corporation, 40531 Göteborg (SE)
(72) Inventor: Otterspeer, Rob, 42349 Torslanda (SE)

(57) **Abstract**

A camshaft position system (1) for determining the position of the camshaft (2) relative to the crankshaft of an internal combustion engine comprises an engine control unit (3). The system (1) further comprises a pressure sensor (4) arranged to monitor the pressure created by the fuel pump (5) of the engine, wherein the engine control unit (3) comprises an algorithm for determining the position of the camshaft (2) relative to the crankshaft with the output signals from the pressure sensor (4). Further, a method for determining the position of a camshaft relative to the crankshaft position in an internal combustion engine, comprises retrieving information from a pressure sensor (4) arranged in a fuel pump (5) and running the information in an algorithm in an engine control unit (3) for deciding the relative positions of the shafts.

## Description

### FIELD OF THE INVENTION

The present invention relates to a camshaft position system for determining the location of the camshaft relative the crankshaft of an internal combustion engine, the system comprising an engine control unit. The present invention also relates to a method for determining the relative locations of the crankshaft and the camshaft of an internal combustion engine.

### TECHNICAL BACKGROUND

The relationship between the rotation of the camshaft and the rotation of the crankshaft is of critical importance. Since the valves control the flow of the air/fuel mixture intake and exhaust gases, they must be opened and closed at the appropriate time during the stroke of the piston. For this reason, the camshaft is connected to the crankshaft either directly, via a gear mechanism, or indirectly via a belt or chain called a timing belt or timing chain. Direct drive using gears is unusual because the frequently reversing torque caused by the slope of the cams tends to quickly wear out gear teeth. Where gears are used, they tend to be made from resilient fibre rather than metal, except in racing engines that have a high maintenance routine. Fibre gears have a short life span and must be replaced regularly, much like a cam belt. In some designs the camshaft also drives the distributor and the oil and fuel pumps. Some vehicles may have the power steering pump driven by the camshaft. With some early fuel injection systems, cams on the camshaft would operate the fuel injectors.

A crank position sensor is an electronic device used in an internal combustion engine to monitor the position or rotational speed of the crankshaft. This information is used by engine management systems to control ignition system timing and other engine parameters. Before electronic crank sensors were available, the distributor would have to be manually adjusted to a timing mark on the engine.

The crank sensor can be used in combination with a similar camshaft position sensor to monitor the relationship between the pistons and valves in the engine, which is particularly important in engines with variable valve timing. This method is also used to "synchronize" a four stroke engine upon starting, allowing the management system to know when to inject the fuel. It is also commonly used as the primary source for the measurement of engine speed in revolutions per minute.

Common mounting locations include the main crank pulley, the flywheel, the camshaft or on the crankshaft itself. This sensor is the most important sensor in modern day engines. When it fails, there is a chance the engine will not start, or cut out while running.

### SUMMARY OF THE INVENTION

The object of the present invention is to provide a method and a system for determining the positions of the crankshaft and the camshaft that at least alleviates the problems with prior art.

This object is achieved with as set forth in the appended claims.

According to the present invention a camshaft position system for determining the location of the camshaft relative the crankshaft of an internal combustion engine comprises an engine control unit. The system further comprises a pressure sensor arranged to monitor the pressure created by the fuel pump of the engine, wherein the engine control unit comprises an algorithm for determining the location of the camshaft relative the crankshaft using the output signals from the pressure sensor.

Variable Camshaft Timing (VCT) is an automobile variable valve timing technology. It uses electronically controlled hydraulic valves that direct high pressure engine oil into the camshaft phaser cavity. These oil control solenoids are bolted into the cylinder heads towards the front of the engine near the camshaft phasers. The powertrain control module (PCM) transmits a signal to the solenoids to move a valve spool that regulates the flow of oil to the phaser cavity. The phaser cavity changes the valve timing by rotating the camshaft slightly from its initial orientation, which results in the camshaft timing being advanced or retarded. The PCM adjusts the camshaft timing depending on factors such as engine load and RPM. This allows for more optimum engine performance, reduced emissions, and increased fuel efficiency compared to engines with fixed camshafts.

The solution of the present invention is to measure the fuel pressure rise in the fuel rail. Since the lobe of a camshaft has a period of 120 degrees (on a six cylinder engine (720/6)), the relative timing of the pressure compared to the crankshaft position is only possible in the exact positions where the lobe creates a pressure rise. In a six cylinder application this would be in three positions. Once the first pressure rise is measured, it is compared to the expected pressure rise based on a fully retarded VCT. Once the crankshaft and camshafts have determined the actual positions, as in a system with 2 cam and 1 crank position sensor, again the difference between the expected pressure rise and actual pressure rise is the actual VCT position.

For twin cam or dual overhead cam (DOHC) engines, VCT is used on either the intake or exhaust camshaft. (Engines that have VCT on both camshafts are now designated as Ti-VCT.) The use of variable camshaft timing on the exhaust camshaft is for improved emissions, and vehicles with VCT on the exhaust camshaft do not require exhaust gas recirculation (EGR) as retarding the exhaust cam timing achieves the same result. VCT on the intake camshaft is used primarily for increasing engine power and torque as the PCM is able to optimize the opening of the intake valves to match the engine conditions.

Ti-VCT Twin Independent Variable Camshaft Timing (Ti-VCT) is the name for engines with the ability to vary the camshaft timing of both the intake and exhaust camshafts independently. Despite the name difference, its operation is the same as standard VCT. Unlike the original versions of VCT, which only operated on a single camshaft, Ti-VCT allows the PCM to advance or retard the timing of both the intake and exhaust camshafts independently. This allows for improved power and torque, particularly at lower engine RPM, as well as improved fuel economy and reduced emissions.

In internal combustion engines, variable valve timing (VVT), also known as Variable valve actuation (VVA), is a generalized term used to describe any mechanism or method that can alter the shape or timing of a valve lift event within an internal combustion engine. VVT allows the lift, duration or timing (in various combinations) of the intake and/or exhaust valves to be changed while the engine is in operation. Two-stroke engines use a power valve system to get similar results to VVT. There are many ways in which this can be achieved, ranging from mechanical devices to electro-hydraulic and camless systems.

The valves within an internal combustion engine are used to control the flow of the intake and exhaust gases into and out of the combustion chamber. The timing, duration and lift of these valves events have a significant impact on engine performance. In a standard engine, the valve events are fixed, so performance at different loads and speeds is always a compromise between driveability (power and torque), fuel economy and emissions. An engine equipped with a variable valve actuation system is freed from this constraint, allowing performance to be improved over the engine operating range.

According to one aspect of the present invention the system further comprises a camshaft position sensor connected to the engine control unit. In prior art systems a position sensor is what is used. The system of the present invention could replace this traditional way of position monitoring. However, if a more "secure" system is desired the prior art system with a shaft position sensor could be used as a backup to the system of the present invention or vice versa.

A possible alternative is to have a crankshaft position sensor connected to the engine control unit. A further alternative is of course to have sensors on both the crankshaft and the camshaft, as well as the system of the present invention.

### BRIEF DESCRIPTION OF THE DRAWINGS

The invention will now be further disclosed with reference to the accompanying drawings.

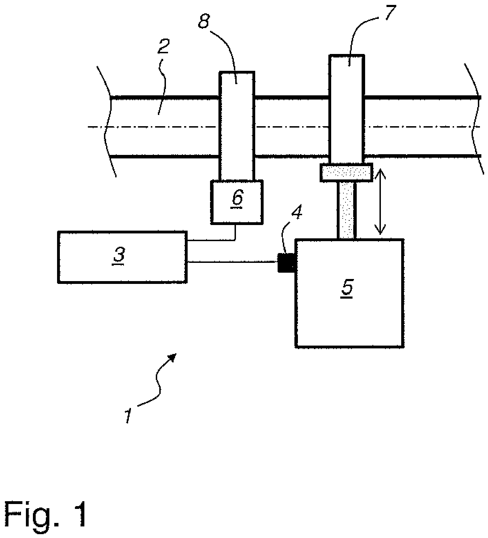

Figure 1 is a partial and simplified illustration of a system according to the present invention.

### DISCLOSURE OF AN EMBODIMENT

Figure 1 shows a partial and simplified illustration of a camshaft position system 1 according to the present invention. The camshaft position system 1 for determining the location of the camshaft 2 relative the crankshaft of an internal combustion engine comprises an engine control unit (3). Further, the system 1 comprises a pressure sensor 4 arranged in the fuel pump 5 of the engine, wherein the engine control unit 3 comprises an algorithm for determining the location of the camshaft 2 relative the crankshaft with the output signals from the pressure sensor 4. Also shown in the figure is a camshaft position sensor 6 connected to the engine control unit 3. According to the present invention, one of the advantages with using the fuel pump for deciding the relative positions of the camshaft and the crankshaft is that the traditional sensors can be made obsolete, enabling a cost saving as well as reducing requirements on packaging. Especially packaging is an issue with most modern engines.

A spring loaded piston of the fuel pump 5 is moved by the lobe 7 on the camshaft 2 in order to pump the fuel. For the position sensor 6 there is a separate lobe 8 that could be centred with the camshaft 2 such that no moving parts are necessary.

The foregoing is a disclosure of an example practicing the present invention. However, it is apparent that incorporating modifications and variations will be obvious to one skilled in the art. Inasmuch as the foregoing disclosure is intended to enable one skilled in the art to practice the instant invention, it should not be construed to be limited thereby, but should be construed to include such modifications and variations as fall within the scope of the claims. For instance, the system of the present invention is in the figure shown with a traditional position sensor, but most preferred is to have a system without this traditional sensor, i.e. with only the pressure sensor on the fuel pump. Further, the pressure sensor is also possible to arrange on the fuel rail which even be more advantageous. For facilitating the understanding and simplifying the drawings the pressure sensor is in the embodiment of the figure shown as attached to the fuel pump. However, it is more likely for most applications that the pressure sensor will be arranged on the fuel rail.

## Claims

1. A camshaft position system (1) for determining the location of the camshaft (2) relative the crankshaft of an internal combustion engine, the system comprising an engine control unit (3),
**characterised in**
**that** the system (1) further comprises a pressure sensor (4) arranged to monitor the pressure created by the fuel pump (5) of the engine, wherein the engine control unit (3) comprises an algorithm for determining the location of the camshaft (2) relative the crankshaft with the output signals from the pressure sensor (4).

2. A camshaft position system (1) according to claim 1, further comprising a camshaft position sensor (6) connected to the engine control unit (3).

3. A camshaft position system (1) according to any of the preceding claims, further comprising a crankshaft position sensor connected to the engine control unit (2).

4. An internal combustion engine comprising a camshaft position system (1) according to any of the preceding claims.

5. An internal combustion engine according to claim 4, wherein the fuel pump (5) is a direct injection high pressure fuel pump.

6. A vehicle comprising an internal combustion engine according to any of the claims 4 to 5.

7. A method for determining the position of a camshaft position relative the crankshaft position in an internal combustion engine, comprising
- retrieving information from a pressure sensor (4) arranged in a fuel pump (5) and
- running the information in an algorithm in an engine control unit (3) for deciding the relative positions of the shafts.
